# EUROPEAN PATENT APPLICATION

(11) **EP 1 229 001 A1**
(43) Date of publication of application: **07.08.2002**
(21) Application number: 00938828.1
(22) Date of filing: 15.06.2000
(51) Int. Cl.: C01B 39/48, C01B 39/20, C01B 39/44, C01B 39/26, B01J 29/04

(54) **SYNTHESIS OF ZEOLITES**

(30) Priority: 17.06.1999 ES 9901403
(71) Applicant: CONSEJO SUPERIOR DE INVESTIGACIONES CIENTIFICAS, 28006 Madrid (ES); UNIVERSIDAD POLITECNICA DE VALENCIA, 46022 Valencia (ES)
(72) Inventor: CORMA CANOS, Avelino, Inst.de Tecnologia Quimica, Naranjos, 46022 Valencia (ES); PENA LOPEZ, Maria Lourdes, Univ. Politécnica, Naranjos, 46022 Valencia (ES); REY GARC A, Fernando, Univ. Politécnica, Naranjos, 46022 Valencia (ES); VALENCIA VALENCIA, Susana, Univ.Politécnica, Naranjos, 46022 Valencia (ES)
(74) Representative: Ungria Lopez, Javier
(86) International application number: ES0000217
(87) International publication number: WO0078677

(57) **Abstract**

This invention describes a general process in which, by means of the use of tensioactives, it permits a reduction of the synthesis times for crystalline microporous materials based on silica with ducts with a pore opening formed of 10 or 12 tetrahedra of silica. This procedure is based on the addition of a tensioactive, which can be cationic, anionic or neutral, to the reaction mixture wherein the zeolite is formed. In addition, this new synthesis method increases the efficiency of the reagents used in the synthesis of zeolites and the stability of the materials formed, permitting the size of crystal to be controlled. And in cases wherein there exists competition for the growth of different microporous materials, it is possible to promote the appearance of one phase with respect to another competing with it by a proper selection of surfactant.

## Description

### Field of the Technique:

Preparation of zeolitic materials of catalytic interest

### Background:

The crystallisation of zeolites and zeotypes is a process involving an enormous number of variables that can affect not just the crystalline structure that is obtained but also the properties of the resulting material. The parameters controlling the synthesis of this type of material are far from being understood in their entirety and, in general, purely empirical procedures are applied to obtain new structures the properties of those already in existence are modified. This can be understood when taking into account the enormous complexity of the chemical systems involved in the synthesis gels of zeolites and zeotypes.

In general, zeolites crystallise under hydrothermal conditions, in other words, in the presence of water at temperatures between 50 and 400 °C. The water acts as a transport medium for the species giving rise to the microporous solid; it also promotes hydrolysis of the T-O-T bonds of the zeolite precursors and the formation of others; and finally it fills the empty spaces in the material.

Three stages are generally differentiated during the crystallisation of zeolites, these stages overlapp in time: nucleation, growth and decay process. An initial stage of reorganisation of the synthesis gel during the initial heating can also be included.

Nucleation is the stage in which the crystallisation nuclei of feasible zeolites are formed, these nuclei being particles that have exceeded a critical size. Such nuclei can be described as small crystalline groupings, generally not detectable by means of X-ray diffraction and which can grow spontaneously, while smaller groupings are unstable in the synthesis medium and dissolve before they can grow.

The most widely accepted theory is that the zeolite crystallisation nuclei are formed in the interface between the solution and the amorphous solid that is formed during the reorganisation stage of the gel, with nutrients being transported towards the crystal that is being formed. Nevertheless, evidence exists that could point to the fact that spontaneous nucleation in the solution takes place and that in some cases direct transformation of the gel into zeolite could occur.

The growth stage starts before the nucleation ends, in other words, there exists a period in which nucleation and growth compete for the incorporation of nutrients. This causes the nucleation curve to display a maximum. The distribution of the size of zeolite crystals and the average size of them will depend on the competition between nucleation speed and growth speed. The final distribution will be narrower when the nucleation speed is greater, and the greater the number of nuclei that are formed the smaller the crystal size will be.

The decay stage occurs when the concentration of reagents in solution is no longer sufficiently high for the crystallisation process to continue. The profile of the crystallisation curve has a sigmoid shape as a consequence of the overlapping of all the processes involved in the synthesis of zeolites.

As mentioned earlier, the synthesis of zeolites and zeotypes is generally undertaken in an aqueous medium under hydrothermal conditions. In addition to the sources of silicon (or phosphorus and aluminum), alkaline cations and organic cations, use is also made of hydroxide or fluoride anions as mineralising agents, i.e., as silicon mobiliser agents (or phosphorus and aluminum). In the case of synthesis in which the mineralising agent are hydroxide groups, the pH is generally greater than 10 in the synthesis of zeolites since under these conditions sufficient solubility is achieved of the silicon species that will form the zeolite. In the case of microporous aluminophosphates the working pH can be very much lower, closer to neutral or even slightly acid.

When a fluoride medium is used for the synthesis of zeolites, the pH is generally close to 7 since fluorosilicates are much more soluble at lower pH than are silicates, which means that sufficient mobility of the silicon species is obtained for forming the zeolite at lower pH than in the case of synthesis in OH⁻ medium. The use of fluoride medium in the synthesis of zeolites gives rise to the formation of zeolitic materials of large crystal size and with a very small number of defects, which confers on them a markedly hydrophobic nature, while synthesis in a basic medium generally gives rise to zeolites with a smaller crystal size and a large number of defects, and therefore with a hydrophilic nature.

In some cases, the formation of the zeolitic material requires very long crystallisation times, which implies a major cost in the production of them. There exist various possibilities for reduce those times, such as for example the use of organic cations in the synthesis of zeolites. This fact has been seen in the synthesis of zeolite ZSM-5, the synthesis of which is shortened when tetrapropylammonium cations are introduced into the composition of the synthesis gel. The use of organic cations has been widely studied in the synthesis of new zeolites since they can display a director effect on the structure, which not only accelerates the formation process of zeolite structures but in some cases also leads to the formation of new microporous structures. Nevertheless, in general, tetraalkylammonium cations used in the synthesis of zeolites are expensive and imply a considerable cost in the final price of the catalyst.

Another method for accelerating the crystallisation of zeolites is the incorporation of microcrystals of zeolite into the synthesis gel which act as crystallisation nuclei in the formation process of the zeolite.

Finally, increasing the crystallisation temperature or reducing the amount of water in the gel increases the crystallisation speed of the zeolites. Nevertheless, both parameters can influence the zeolite phase that crystallises out and in general one sees that increasing the temperature or the concentration of reagents promotes the formation of denser phases.

To end, it can be emphasised that the enthalpy of formation of quartz with respect to that of most zeolites is very low, which suggests that at the crystallisation temperatures that one works at the formation of zeolites is conditioned by the kinetics of the process rather than by purely thermodynamic factors. This makes it possible to talk of kinetic control in the formation of zeolites, due to which it can be expected that by modifying the reaction speed of a system the appearance of one structure rather than another will be promoted.

### Brief description of the invention

This invention claims a new method for the preparation of zeolites that permits their crystallisation times to be reduced, characterised by the incorporation of a cationic, anionic or neutral surfactant into the reaction mixture of which the zeolite is crystallised out.

The method consists of heating to 50-250 °C a reaction mixture containing a source of at least one tetravalent element T(IV), optionally a source of a trivalent element T(III), at least one organic or inorganic cation, a source of the ions OH or F, and water, for times of between 5 hours and 180 days. The surfactant is introduced into the synthesis gel from the start of the synthesis, but it can also be incorporated into the reaction mixture during the nucleation stage of the zeolite, the moment at which it is incorporated being between 0 and 140 days. The surfactant can be cationic, anionic or neutral. The addition of the tensioactive reduces the crystallisation times of zeolites, basically during the nucleation stage. Moreover, in the synthesis carried out in the presence of surfactants, it is observed that the efficiency in the incorporation of T(IV) and optionally T(III) increases with respect to conventional syntheses in the absence of tensioactives. Finally, is has been demonstrated that this method can be used for increasing the purity of a zeolite phase in the case of simultaneous growth of more than one phase by means of a proper selection of surfactant since, although the increase in the crystallisation speed of zeolites in the presence of surfactants is a general fact, this increase is not identical for different structures, and this permits kinetic control to be exercised over the growth of zeolites in the case of competition among different phases.

### Detailed description of the invention

This invention refers to a new method of synthesis of zeolites with pores formed from ducts with openings of 9 or more silica tetrahedra, permitting crystallisation times to be reduced by means of the use of cationic, anionic or neutral surfactants. Cationic surfactants have the formula R₁R₂R₃R₄Q⁺ wherein Q is nitrogen or phosphorus and where at least one of the substituents R_{1,} R_{2,} R_{3,} or R₄ is an aryl or alkyl group containing more than 6 carbon atoms and fewer than 36, and each of the remaining groups R_{1,} R_{2,} R_{3,} or R₄ is a hydrogen or an alkyl or aryl group with fewer than 5 carbons. Also included among cationic surfactants that can be incorporated into the composition of the gel are those known as geminal surfactants R₁R₂R₃QR₄QR₁R₂R₃ or R₁R₂R₃Q(R₄R₅QR₆QR₄R₅)QₙR₁R₂R₃ where Q is a nitrogen or phosphorus and at least one of the substituents R₁- R₆ is an aryl or alkyl group containing more than 6 carbon atoms and fewer than 36, and each of the remaining groups R₁ - R₆ is a hydrogen or an alkyl or aryl group with fewer than 5 carbon atoms or mixtures of them. In these cases, the groups R_{1,} R_{2,} R_{3,} or R₄ can be interconnected giving rise to cyclic compounds. Cationic surfactants can be used in the form of hydroxide, halide, nitrate, sulphate, carbonate or silicate, or mixtures thereof. Examples of these, though without being limiting, include cetyltrimethylammonium, docdecyltrimethylammonium, cetylpyridinium, cetyltrimethyl-phosphonium, etc.

The surfactants can also be a neutral surfactant, in which case it has the formula R₁R₂R₃Q wherein Q is nitrogen or phosphorus and wherein at least one of the substituents R_{1,} R_{2,} or R₃ is an aryl or alkyl group containing more than 6 carbon atoms and fewer than 36, and each of the remaining groups R_{1,} R₂ or R₃ is a hydrogen or an alkyl or aryl group with fewer than 5 carbons, being dodecylamine, cetylamine and cetylpyridine non-limiting examples thereof. Neutral compounds of the formula nR-EO, consisting of oxides of alkylpolyethylene, oxides of alkyl-aryl-polyethylene and copolymers of alkylpolypropylene and alkylethelene, are also able to act as surfactants being the commercial surfactants known as Tergitol 15-S-9, Triton X-114, Igepal RC-760, Pluronic 64 L, Tetronic and Sorbitan non-limiting examples thereof. Esters derived from fatty acids obtained by reaction with short chain alcohols, sugars, amino acids, amines and polymers or copolymers derived from polypropylene, polyethylene, polyacrylamide or polyvinyl alcohol are also able to be used as surfactants. Lisolecitine, lecitine, pentaoxyethylene dodecyl ether, phosphatyldilauryldiethanolamine, digalactose diglyceride and monogalactose diglyceride are non-limiting examples thereof.

The surfactant can also be an anionic surfactant with the formula RQ⁻, wherein R is an aryl or alkyl group containing more than 6 carbon atoms and fewer than 36, and Q is a sulphate, carboxylic or phosphate group, non-limiting examples of these being dodecylsulphate, stearic acid, Aerosol OT and phospholipids such as phosphatylcoline and diethanolamine phosphatyl.

Materials prepared in this manner are characterised by being obtained in crystallisation times very much shorter than in conventional syntheses in the absence of surfactants.

The method of preparation is based on the heating under hydrothermal conditions at temperatures between 50 and 250 °C of a reaction mixture containing a source of silicon, such as for example, without being limiting, amorphous silica, colloidal silica, silica gel, tetraalkylorthosilicate or sodium silicate, optionally a source of aluminum such as for example, without being limiting, aluminum oxyhydroxides, aluminum alkoxides, metallic aluminum or any inorganic salt of aluminum, or other trivalent element such as for example, without being limiting, Fe, Ga, B, Cr, etc. The reaction mixture can also optionally contain a source of Ti, such as for example, without being limiting, titanium halides, titanium alcoxides, dichlorotitanocene or titanium complexes wherein the titanium atom is coordinated by a dionate group such as acetylacetonate, ammonium or sodium hexafluorotitanate or any ionic complex or salt containing titanium in its composition, or other tetravalent element such as for example, without being limiting, Ge, Zr, V or Sn. Optionally, a director agent of the structure can be incorporated into the synthesis gel, this agent being characterised by being an organic cation or an amine, preferably tertiary amines, quaternary alkylamines or organometallic compounds. A source of hydroxyl groups can also be added such as for example, without being limiting, hydroxides of alkaline or alkaline earth metals, or hydroxides of organic alkylammonium cations; or a source of fluoride ions can be added such as for example, without being limiting, fluorides of alkaline metals or fluorides of alkylammonium cations and water. Finally, the surfactant is added to the reaction medium wherein the growth of the zeolite takes place. The addition of the surfactant is preferably done during the nucleation stage or in the organisation of the synthesis gel.

Unlike other methods of synthesis of zeolites, the method claimed in this invention permits zeolitic materials to be obtained with controlled sizes of crystal, which are more stable to heat treatment or treatments at high temperature in the presence of steam.

The synthesis method that is claimed permits to reduce the crystallisation times of zeolites, and it also increases the efficiency of the reagents used in the synthesis of zeolites and enables zeolites to be obtained with a higher concentration of active centres, such as for example, without being limiting, it allows to obtain zeolites with a lower Si/Al ratio, i.e., with a higher content of aluminum and therefore with a higher number of active acid centres in various reactions of industrial interest.

Some of the applications of the zeolitic materials obtained according to this new synthesis method, and which are claimed in this invention, are:
- Use of these materials in catalytic cracking reactions of gasoil.
- Use of these materials in isomerisation reactions of light alkanes.
- Use of these materials in alkylation reactions of olefins and aromatic compounds with paraffins and alcohols.
- Use of these materials in hydrocracking and mild hydrocracking reactions.
- Use of these materials in hydroparaffining and isoparaffining reactions.
- Use of these materials as selective catalysts in selective oxidation reactions of alkanes to alcohols or ketones, alkenes to epoxys or diols or aromatic compounds to compounds hydroxylated with organic or inorganic peroxides.
- Use of these materials as selective catalysts in oxidation reactions of organic sulphides to sulphoxides and sulphones in the presence of organic or inorganic peroxides.
- Use of these materials as selective catalysts in amoximation reactions of ketones.
- Use of these materials as selective catalysts in reduction reactions of ketones with alcohols.

### Examples

### Example 1:

In this example, an MCM-22 type zeolite is prepared with an Si/Al ratio = 50 in the presence of cetyltrimethylammonium bromide using hexamethylenimine as structure director agent and in the presence of OH⁻ (basic medium) as mineralising agent. It is compared with an analogous experiment performed in the absence of cetyltrimethylammonium bromide.

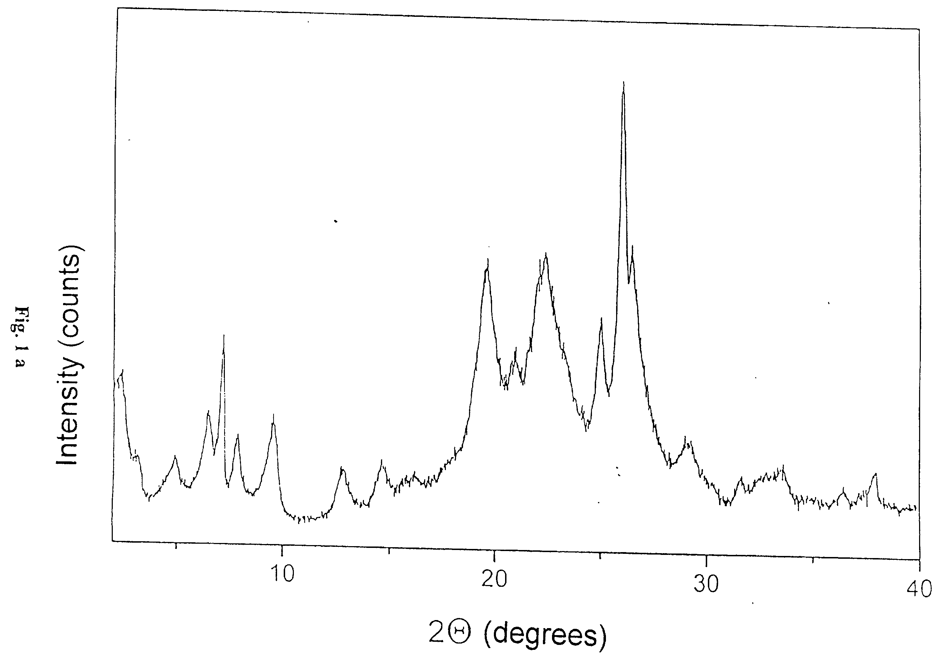

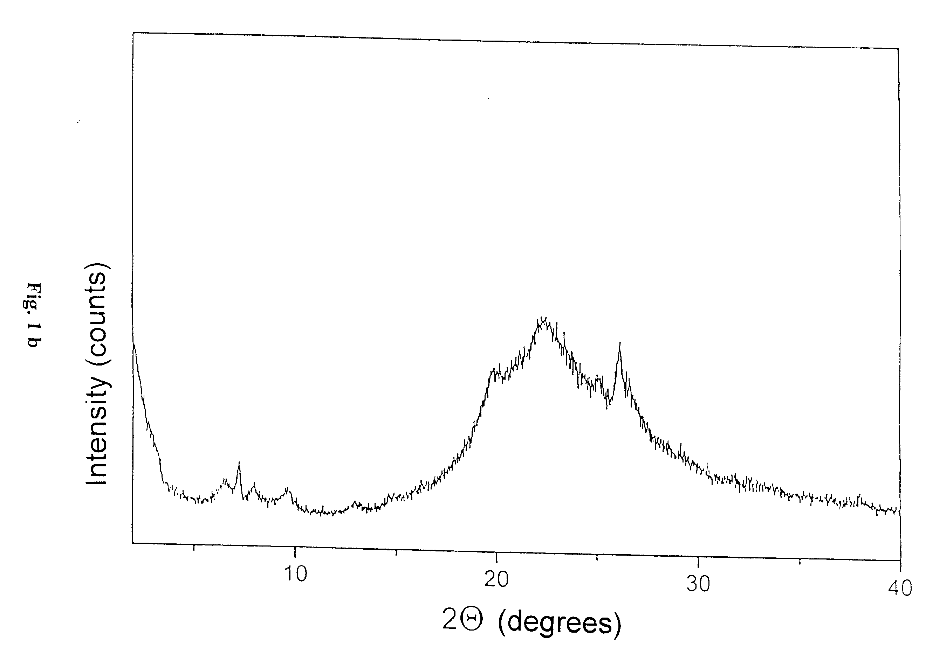

0.0906 g of sodium aluminate and 0.3096 g of NaOH are dissolved in 40.4682 g of water. To this solution 2.48 g of hexamethylenimine are added and it is then stirred for 15 minutes at room temperature. Finally, 3.25 g of colloidal silica are added and the stirring is continued for 30 minutes before introducing the resulting gel into autoclaves which are heated to 135 °C while being stirred at a speed of 60 r.p.m. After five days of heating, 2.37 g of cetyltrimethyl-ammonium bromide are added. The resulting mixture is stirred and again introduced into autoclaves at 135 °C and then stirred for other 24 hours. Afterwards the reaction mixture is cooled down to room temperature and a solid is recovered by means of filtration, exhaustive washing with distilled water and drying at 60 °C for 12 hours. The resulting solid displays an X-ray diagram shown in figure 1a, which is characteristic of the laminar precursor of the MCM-22 structure. A control experiment wherein the surfactant is not introduced gives rise to the formation of a practically amorphous solid upon 6 days of crystallisation (figure 1b).

### Figure 2:

In this example, a ferrierite type zeolite is prepared with a ratio of approximately 25 in the presence of cetyltrimethylammonium bromide using 4-amino-2,2,6,6-tetramethylpiperidine as structure director agent and in the presence of F⁻ ions (pH close to neutral) as mineralising agent. It is compared with an analogous experiment performed in tne absence of cetyltrimethylammonium bromide.

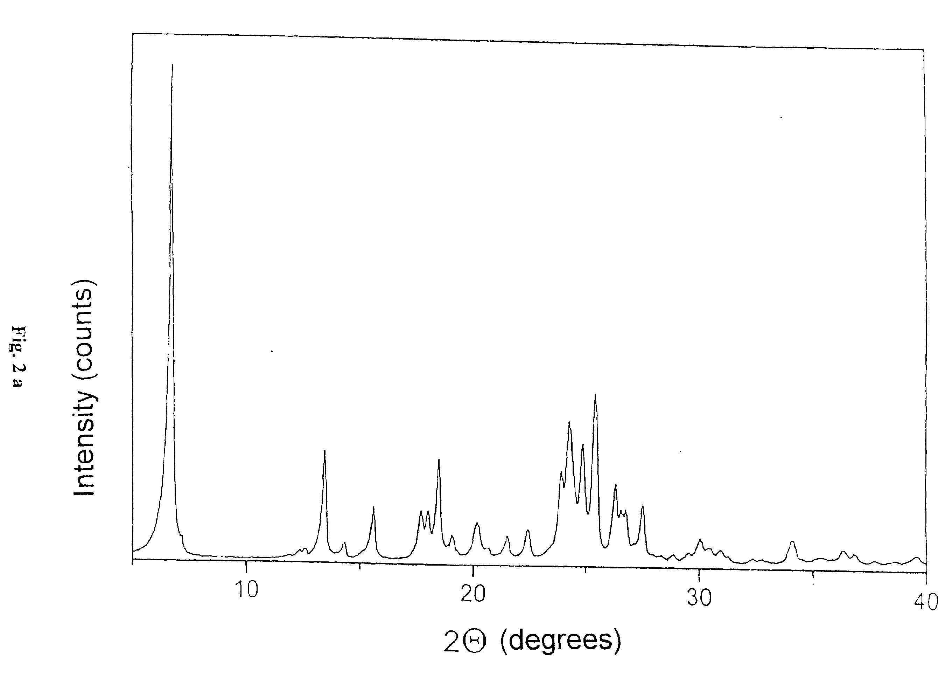

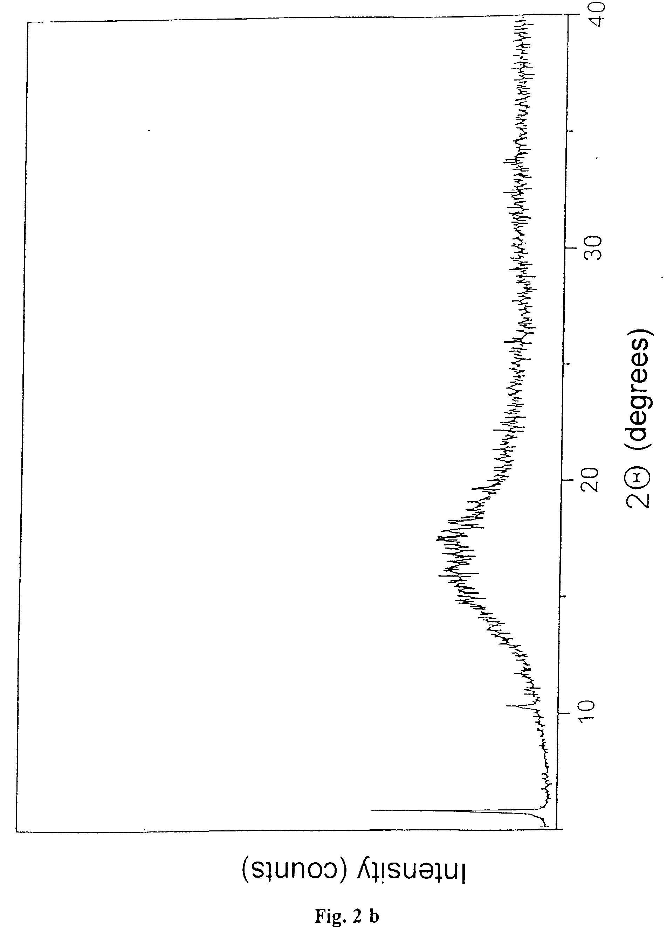

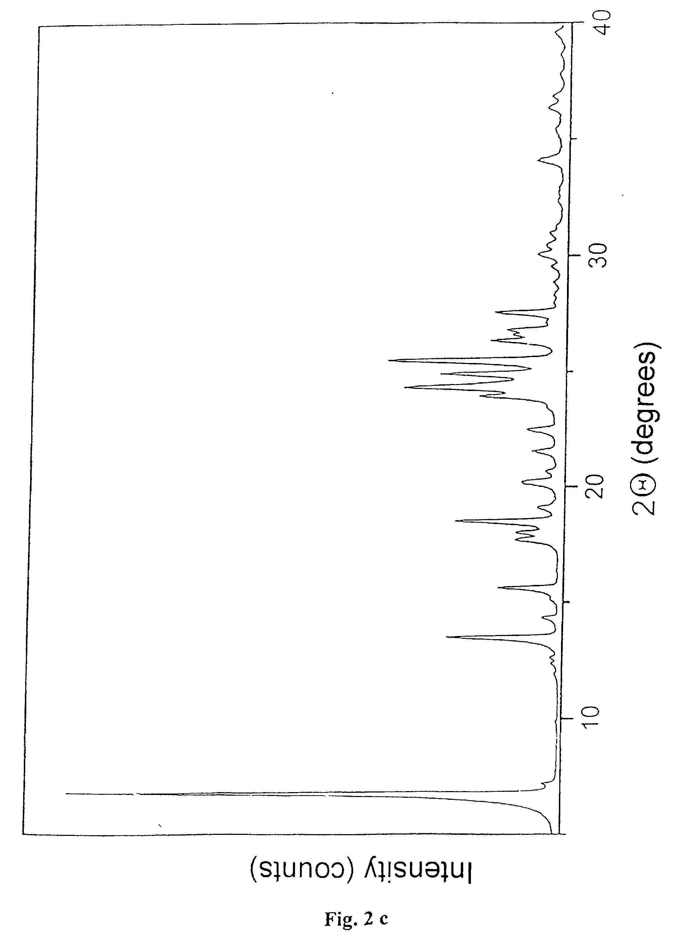

1.38 g of pseudobohemite (Catapal Alumina) are dispersed in 9.72 g of distilled water, with the reagents added in the following order: a solution of 5.55 g of NH₄F in 6.95 g of water, and then an aqueous solution of HF of 46.9% by weight. The mixture is stirred for 15 minutes and then 15.65 g of 4-amino-2,2,6,6-tetramethylpiperidine are added along with 6 g of silica (Aerosil 200). The resulting mixture is stirred until complete homogenisation for 90 minutes. Once that time has elapsed, the synthesis gel is introduced into autoclaves at 135 °C with constant stirring at r.p.m. for 3 days. To this gel 4.37 g of cetyltrimethylammonium bromide are added. The resulting gel is again introduced into autoclaves at 135 °C with constant stirring at 60 r.p.m. for 24 hours. The solid is recovered by filtration, exhaustive washing with distilled water and drying at 60 °C for 12 hours. This solid displays an X-ray diagram shown in figure 2a, which is characteristic of the laminar precursor of a ferrierite type structure. A control experiment wherein the surfactant is not introduced gives rise to the formation of an amorphous solid upon 4 days of crystallisation (figure 2b), and 10 days of heating of the synthesis gel are needed in order obtain to form ferrierite with a similar crystallinity in the absence of surfactant (figure 2c).

### Figure 3:

This example illustrates the formation of a zeolite known as Nu-1 prepared in basic medium (OH⁻ as mineralising agent) and in the presence of tetramethylammonium hydroxide as structure director agent. In this example it can also be seen how the presence of surfactant in the crystallisation medium promotes the obtention of a pure phase thereby preventing competition from sodalite which generally appears as an impurity in conventional syntheses in the absence of surfactants.

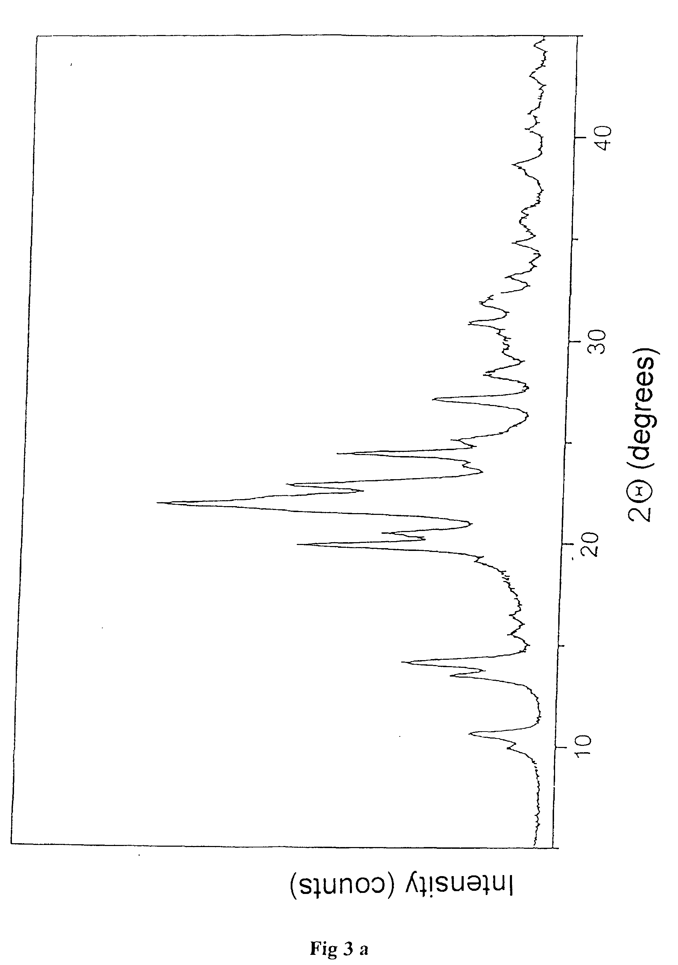

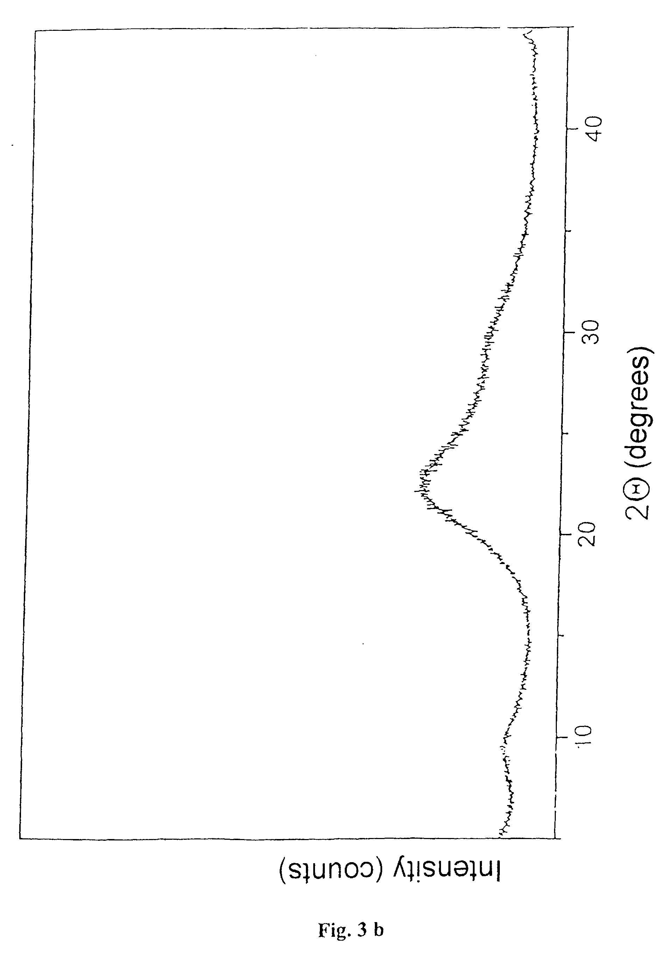

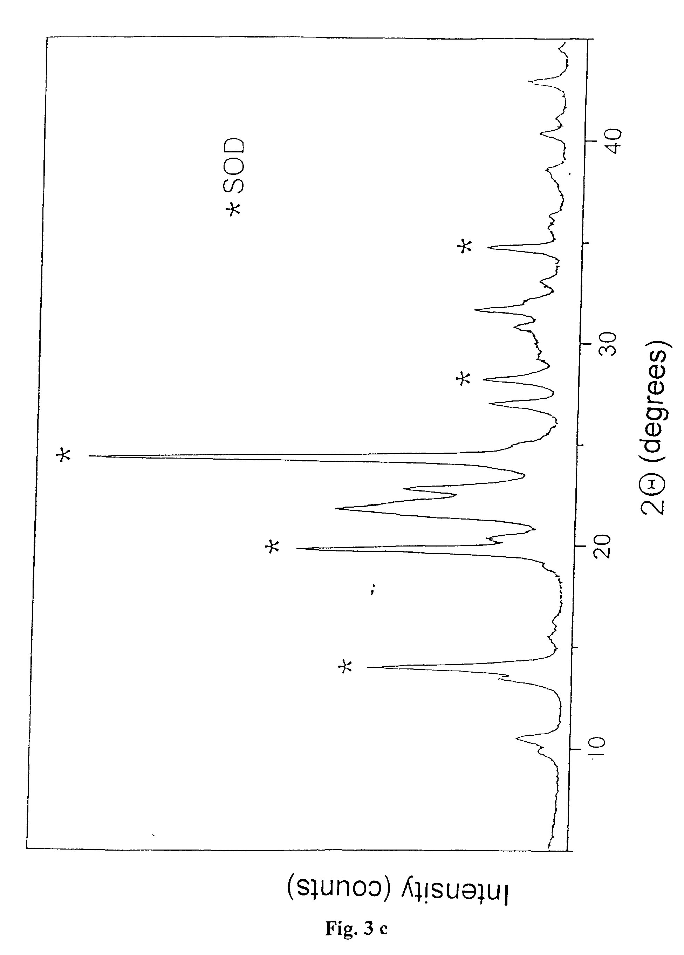

0.62 g of pseudobohemite (Catapal Alumina) are dispersed in a solution of 21.87 g of tetramethylammonium hydroxide in 55.43 g of water. The mixture is stirred for 1 hour and 6 g of silica (Aerosil 200) are then added and the stirring is continued for a further hour. The resulting gel is introduced into autoclaves at 175 °C for 24 hours. Once that time has elapsed, 4.37 g of cetyltrimethylammonium bromide are added to the synthesis gel and crystallisation continues during 4 days. A solid is recovered by filtration, exhaustive washing with distilled water and drying at 60 °C for 12 hours. This solid displays an X-ray diagram shown in figure 3a, which is characteristic of a Nu-1 type structure. A control experiment wherein the surfactant is not introduced gives rise to the formation of an amorphous solid upon 5 days of crystallisation (figure 3b), and 7 days of heating of the synthesis gel are needed in order to be able to form Nu-1 (figure 3c). Nevertheless, in this case it is observed that considerable quantities of sodalite impurities are also formed.

### Example 4:

This example illustrates the effect of the presence of cationic surfactants during the synthesis of Beta zeolite containing aluminum in its composition for a Si/Al ratio = 12.5 In this case a basic synthesis medium is used along with tetraethylammonium hydroxide (TEAOH) as structure director agent and source of hydroxide anions, and cetyltrimethylammonium bromide as surfactant.

22.2 g of amorphous silica (Aerosil 200). are added to an aqueous solution containing 37.84 g of TEAOH (35% by weight) and 39.19 g of water. The resulting gel is stirred for 30 minutes at room temperature. Afterwards a solution obtained by reacting 0.80 g of metallic aluminum in 55.56 g of TEAOH (35% by weight) is added. The final molar relation of the synthesis gel is as follows:
25 SiO₂ : Al₂O₃ : 7.5 TEA₂O : 375 H₂O

The reaction mixture is stirred at room temperature for 30 minutes. The gel is introduced into autoclaves at 140 °C with constant stirring at 60 r.p.m. for 3 days. Once this time has elapsed, 16.14 g of cetyltrimethylammonium bromide (CTABr) are added to the synthesis gel to give the following molar composition of the synthesis gel:
25 SiO₂ : Al₂O₃ : 7.5 TEA₂O : 3 CTABr : 375 H₂O

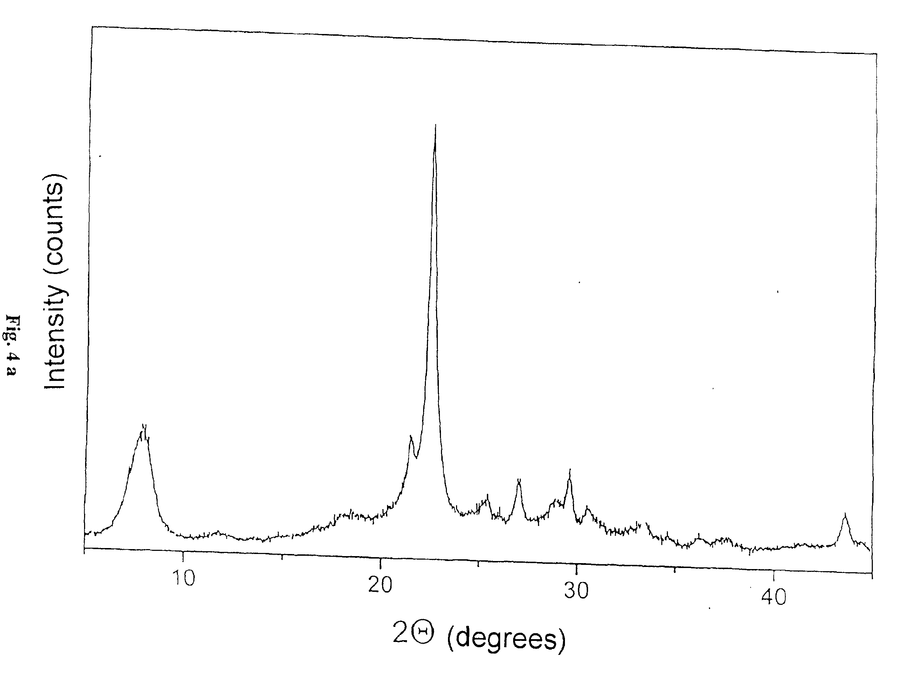

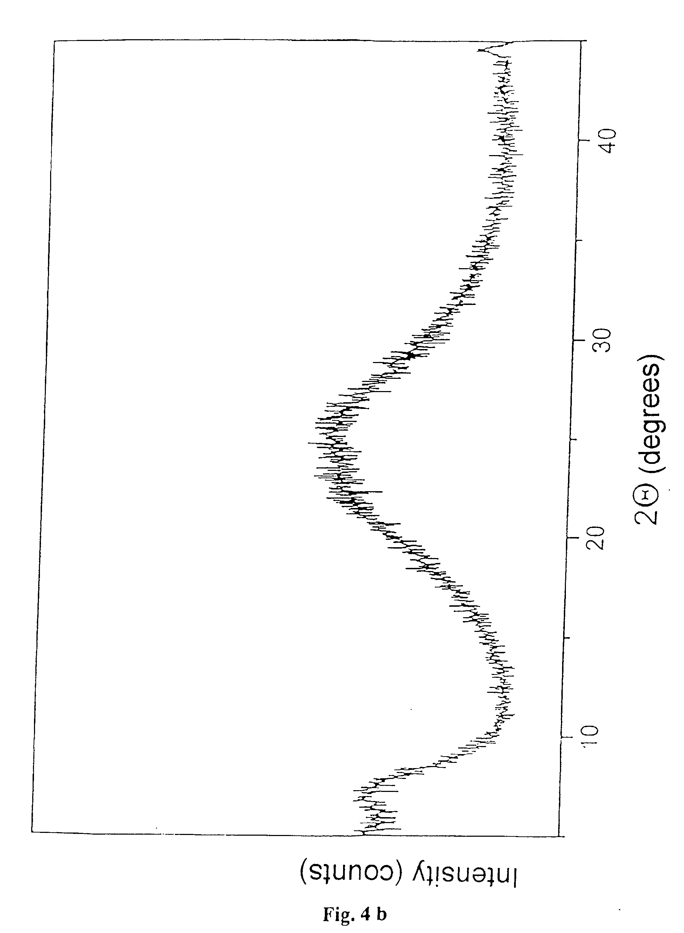

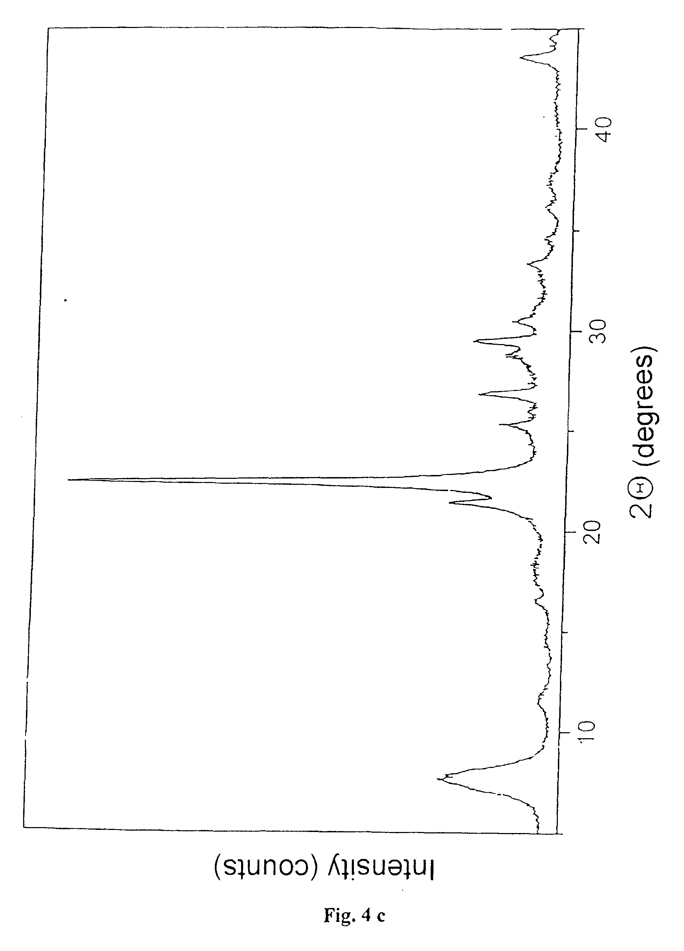

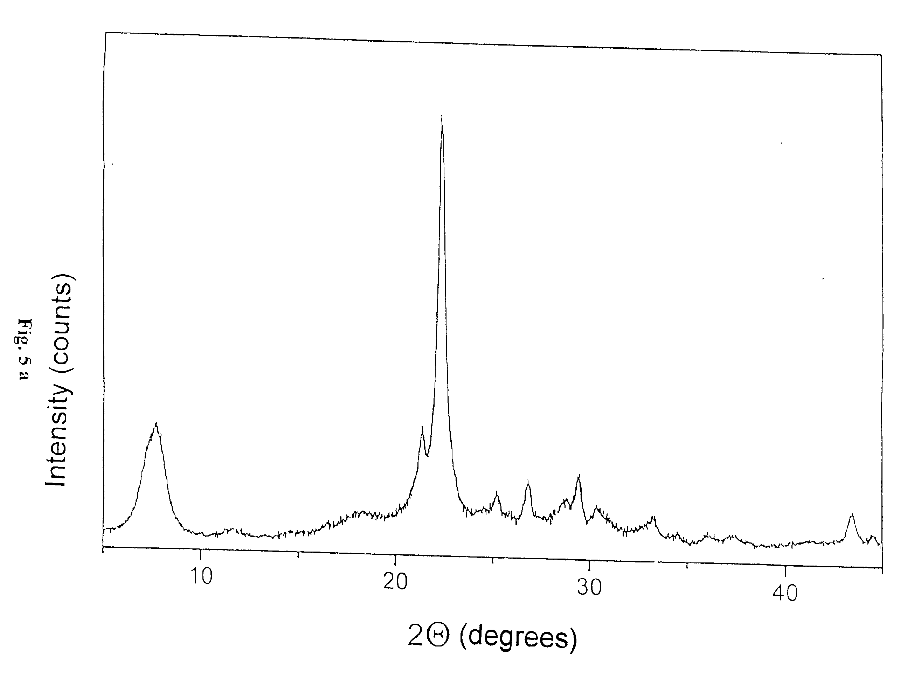

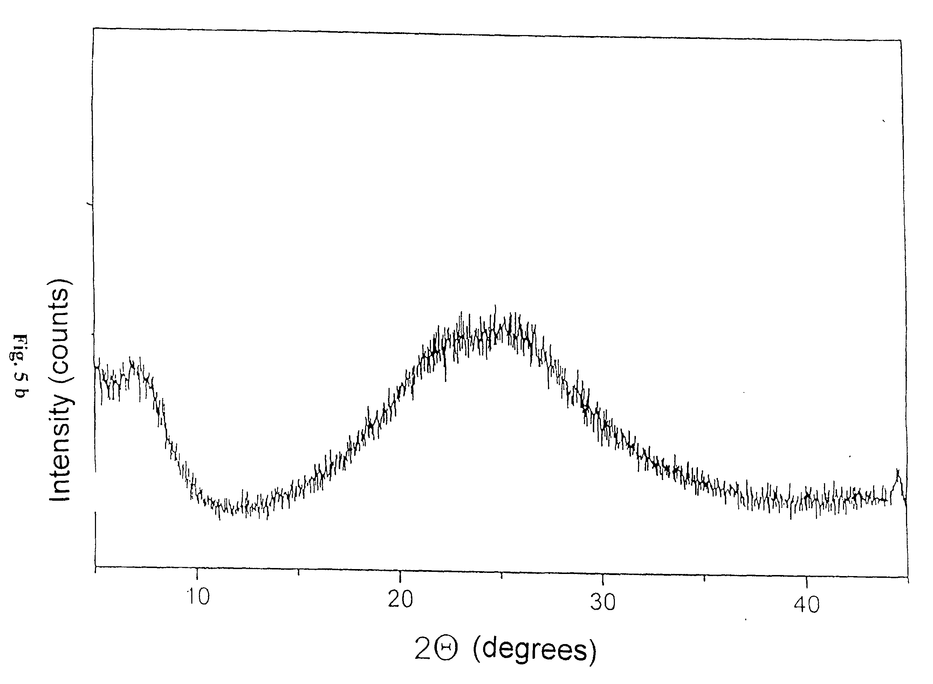

The crystallisation lasts for 1 day. A solid is recovered by filtration, exhaustive washing with distilled water and drying at 60 °C for 12 hours. This solid displays an X-ray diagram shown in figure 4a, which is characteristic of a beta type structure with a crystallinity of 94% referred to standard commercial Beta zeolite. A control experiment wherein the surfactant is not introduced gives rise to the formation of an amorphous solid following 4 days of crystallisation (figure 4b), 7 days of heating of the synthesis gel being necessary in order to obtain Beta zeolite of similar crystallinity (figure 4c).

The Beta zeolite obtained in the presence of surfactants has a crystal size measured by scanning electron microscopy of approximately 100 nm, while the sample obtained in the absence of surfactant has a crystal size of 20 nm determined by transmission electron microscopy.

### Example 5:

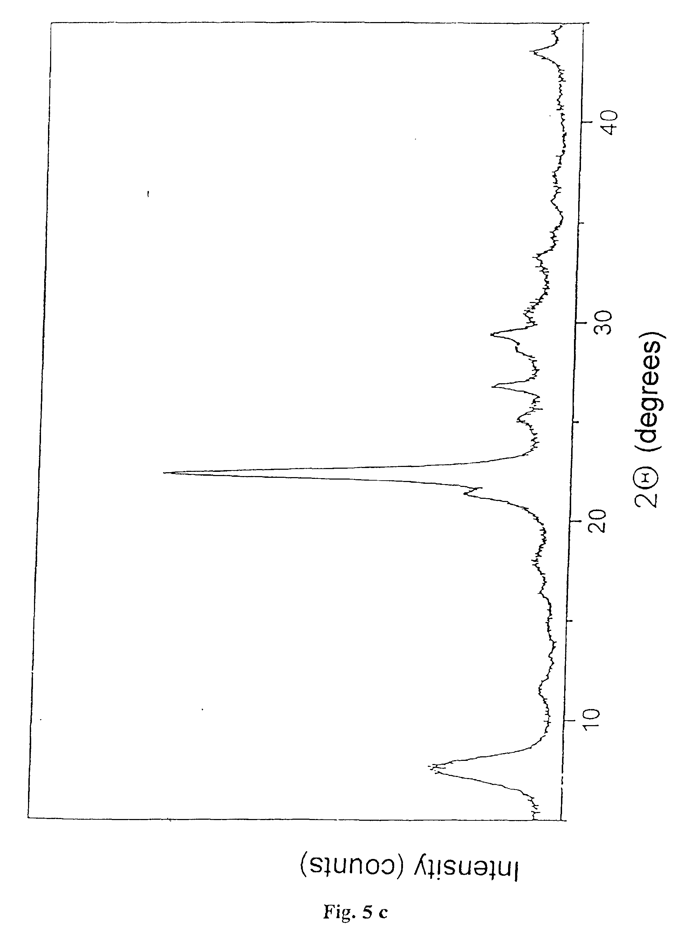

This example describes the synthesis of Beta zeolite with an Si/Al ratio = 12.5 using a similar synthesis method to that described in example 4, but the crystallisation is done without stirring. In this case Beta zeolite was obtained with a crystallinity of 95% (figure 5a) upon four days of heating (3 days without surfactant + 1 day with surfactant). A comparative experiment in the absence of surfactant shows that an amorphous solid is obtained under these conditions after 4 days of heating (figure 5b), with 12 days being needed in order to be able to form a material of similar crystallinity to that formed in the presence of surfactant (figure 5c).

### Example 6:

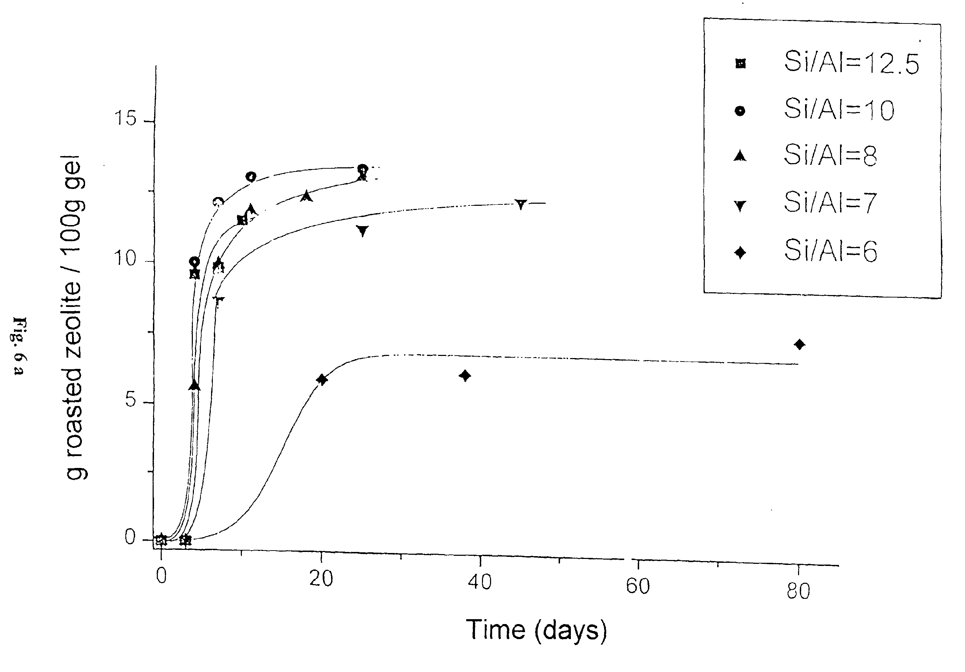

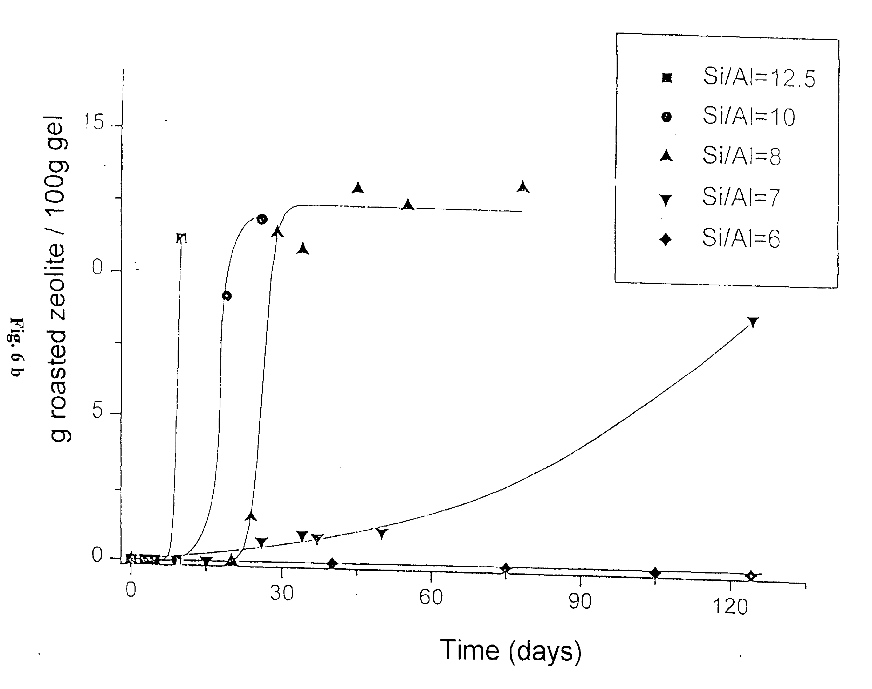

In this example the effect the presence of surfactant during the synthesis of Beta zeolites of different Si/Al ratio is studied. This synthesis procedure was similar to that described in example 4 but the quantities of aluminum and TEAOH were modified in order to obtain the following molar compositions:
x SiO₂ : Al₂O₃ : (0.26x + 1) TEA₂O : 0.12x CTABr : 15x H₂O being the values of x used 12, 14, 16, 20, 25. The crystallisation curves of the different experiments are shown in figure 6a. Control experiments were conducted wherein no surfactant was added, and the crystallisation curves are shown in figure 6b. In all cases a considerable increase can be seen in the crystallisation speed of all the gels containing surfactant, this increase being the increase greater when the Si/Al ratio in the synthesis gel is lower.

### Example 7:

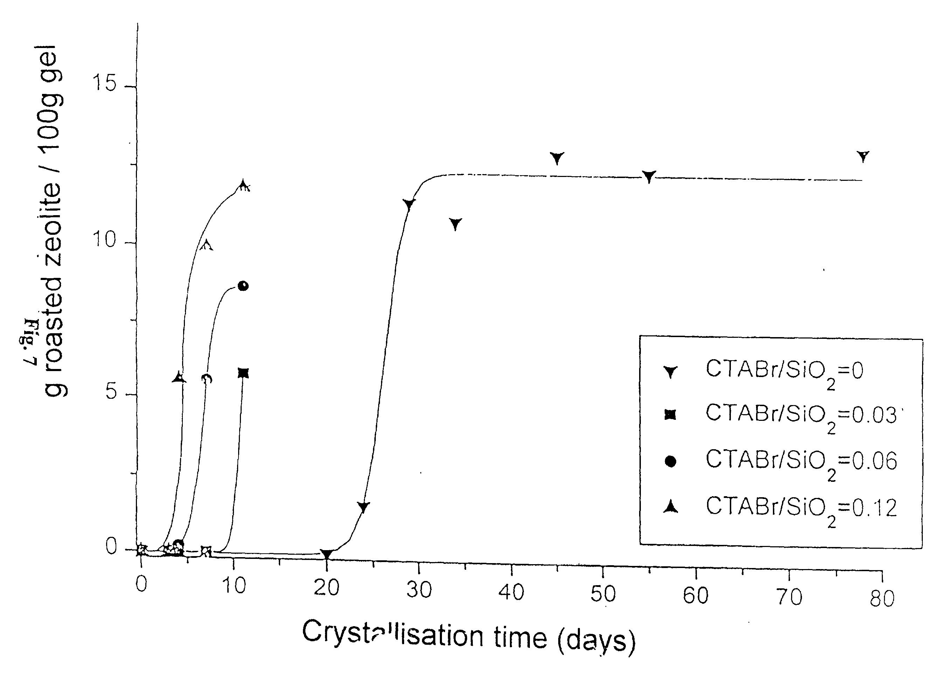

In this example the effect of the concentration of surfactant on the synthesis of Beta zeolites with Si/Al ratio = 8 is studied. The experimental procedure was similar to that described in example 5 but the amount of surfactant added after 3 days of crystallisation was varied. The molar composition of the gels used was:
16 SiO₂ : Al₂O₃ : 5.16 TEA₂O : 16m CTABr : 15x H₂O where m took the values 0, 0.03, 0.06 and 0.12. The crystallisation curves of the different experiments are shown in figure 7. It can be seen that the crystallisation speed decreases when the concentration of tensioactive in the synthesis gel falls. Nevertheless, the accelerating effect on crystallisation is appreciable even with CTABr/Si ratios as low as 0.03.

### Example 8:

In this example the effect of the time at which the surfactant is added during the crystallisation of Beta zeolite with Si/Al ratio = 6 is studied. The molar composition of the gels used was:
12 SiO₂ : Al₂O₃ : 4.12 TEA₂O : 1.44 CTABr : 180 H₂O

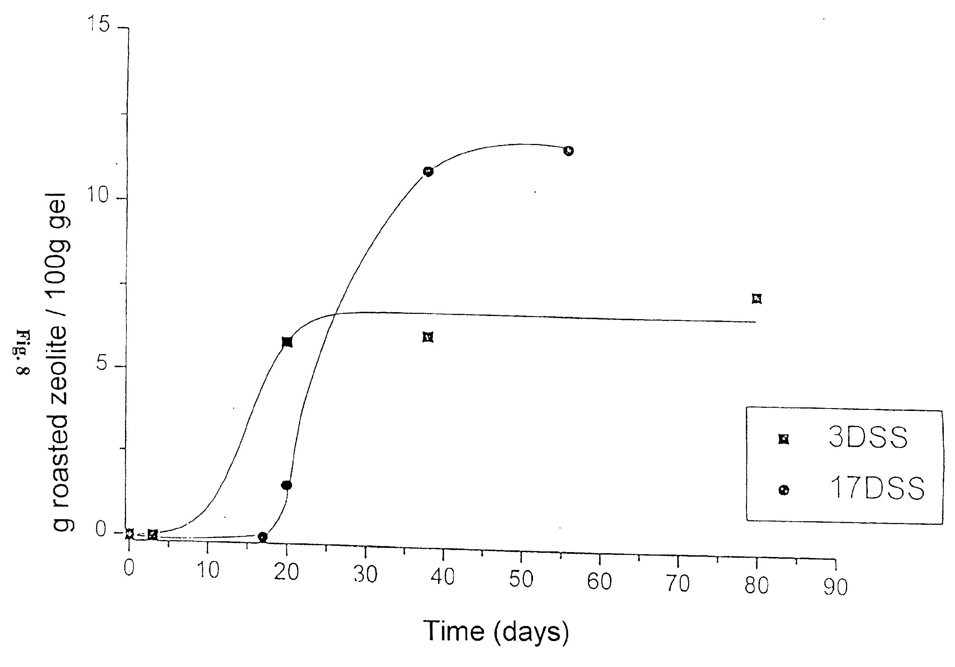

The surfactant was added at 3 and 17 days of crystallisation. The syntheses procedure was similar to that described in example 5. The growth curves of beta zeolite of the different experiments are shown in figure 8. In a control experiment wherein no surfactant was added an amorphous solid was obtained upon 80 days of heating the gel.

### Example 9:

In this example the effect of the presence of a neutral surfactant during the crystallisation of a Beta zeolite with Si/Al ratio = 12.5 is studied. The synthesis method was similar to that described in example 5 but Triton X-100 was used as surfactant instead of CTABr. Triton X-100 is a commercial brand of polymer surfactant polyoxoethylene(10) isoctylphenylether with a formula 4-(C₈H₁₇)C₆H₄(OCH₂CH₂)ₙOH of average molecular weight 646 g/mol (calculated for n = 10). The molar composition of the gels used in this study was:
25 SiO₂ : Al₂O₃ : 7.5 TEA₂O : 3 Triton X-100 : 375 H₂O

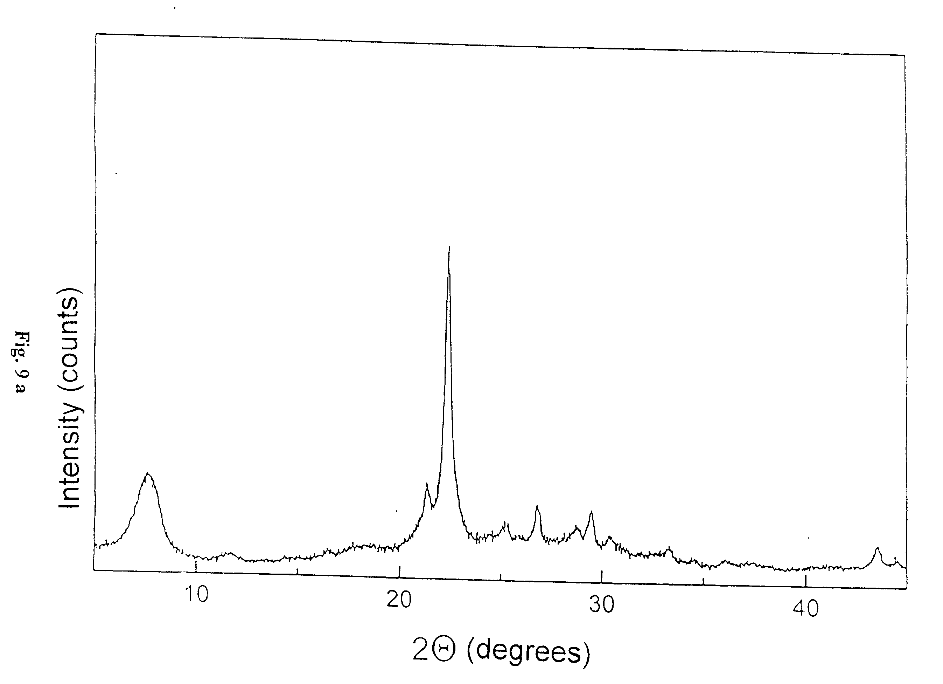

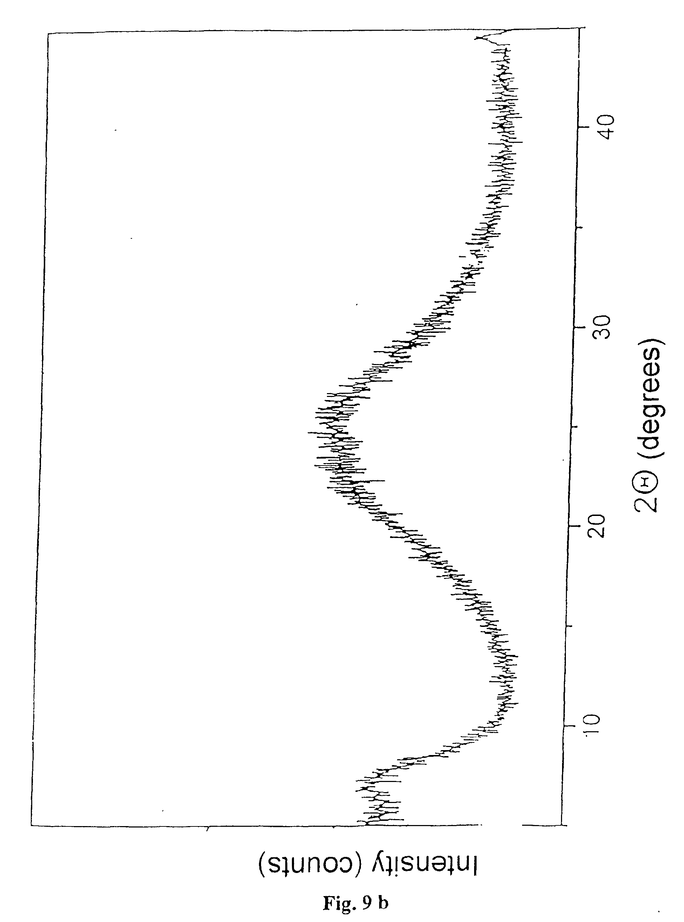

The surfactant as added after three days of static heating of the gel at 140 °C. The crystallisation took a further four days and a solid was recovered displayed a diffraction diagram characteristic of a beta zeolite with a crystallinity of 85% as shown in figure 9a. A control experiment wherein no surfactant was added gave rise to an amorphous solid after seven days of heating the gel under the same conditions (figure 9b).

### Example 10:

In this example the effect of the presence of an anionic surfactant during the crystallisation of a Beta zeolite with Si/Al ratio = 12.5 is studied. The synthesis method was similar to that described in example 5 but lauric acid (Lau) was used as surfactant instead of CTABr. This acid has a formula CH₃(CH₂)₁₀COOH of molecular weight 200.32 g/mol. The molar composition of the gel used in this study was:
25 SiO₂: Al₂O₃ : 7.5 TEA₂O : 3 Lau : 375 H₂O

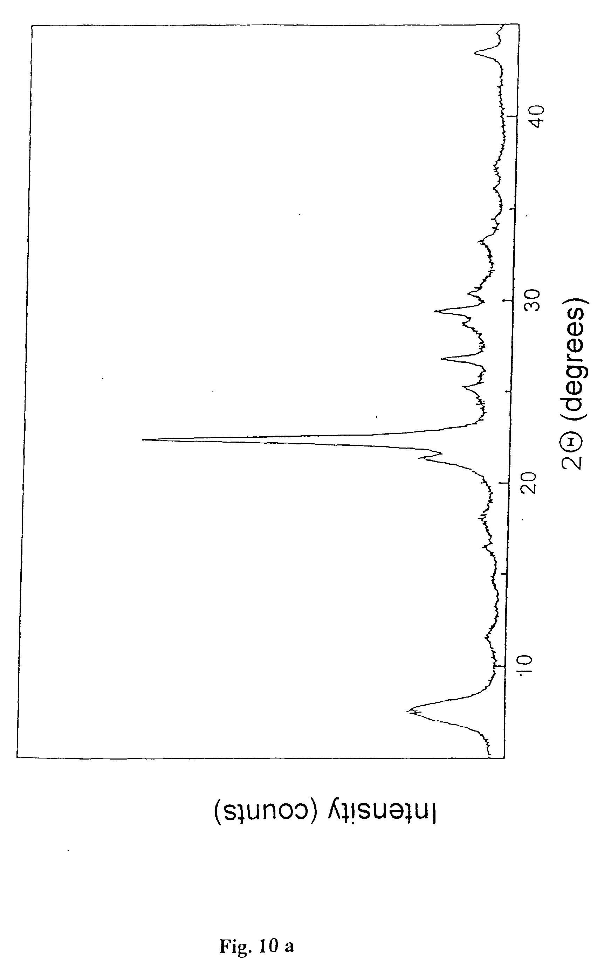

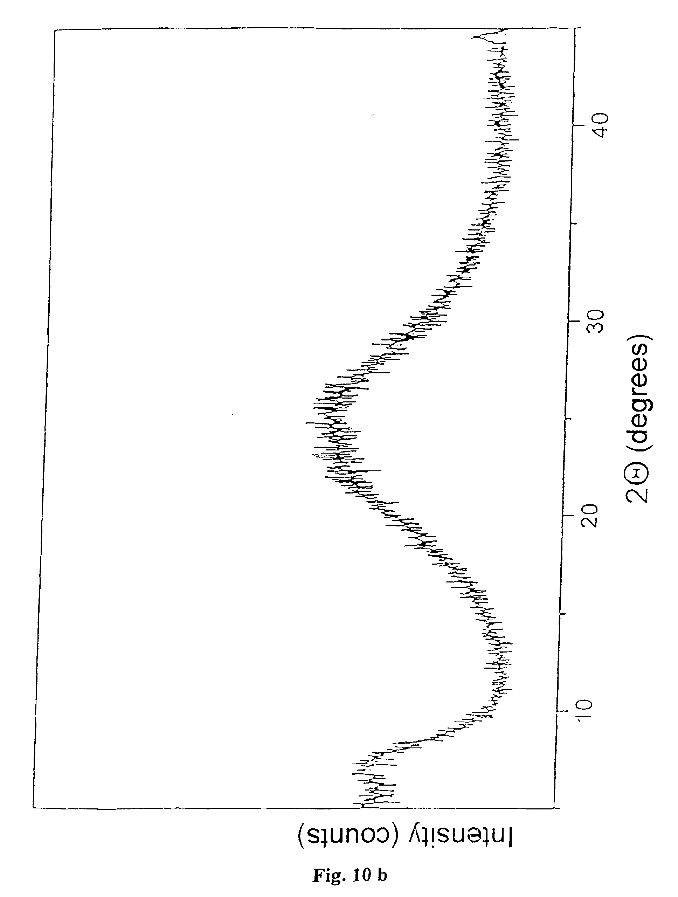

The surfactant was added after three days of static heating of the gel at 140 °C. The crystallisation needed further four days and a solid was recovered that displayed a diffraction diagram characteristic of a beta zeolite with a crystallinity of 107% as shown in figure 10a. A control experiment in which no surfactant was added gave rise to an amorphous solid after seven days of heating the gel under the same conditions (figure 10b).

### Example 11:

In this example, a Beta zeolite containing Ti in its composition, with an Si/Al ratio = 25 is prepared, in the presence of cetyltrimethylammonium bromide using the tetraethylammonium cation as structure director agent and in the presence of F⁻ ions (average close to neutral) as mineralising agent. In addition, H₂O₂ was added to the gel in order to promote the incorporation of Ti into the siliceous structure. It is compared with an analogous experiment performed in the absence of surfactant.

40 g of tratraethylorthosilicate are hydrolysed in a solution containing 45.40 g of TEAOH (35% by weight) and 6.40 g of H₂O₂ (35% by weight). This solution is stirred at 25 °C for 2 hours, forming a fluid gel to which 1.75 g of tetraethylorthotitanate is added and the reaction mixture is left at 25 °C with constant stirring until the ethanol formed during the hydrolysis of the tratraethylorthosilicate and the tetraethylorthotitanate has completely evaporated. To the gel obtained, 4.49 g of HF (48.1% by weight) are added and a damp solid is formed that is completely homogenised by grinding. The molar composition of the synthesis gel is:
25 SiO₂ : TiO₂ : 14.05 TEAF : 8.575 H₂O₂ : 190 H₂O

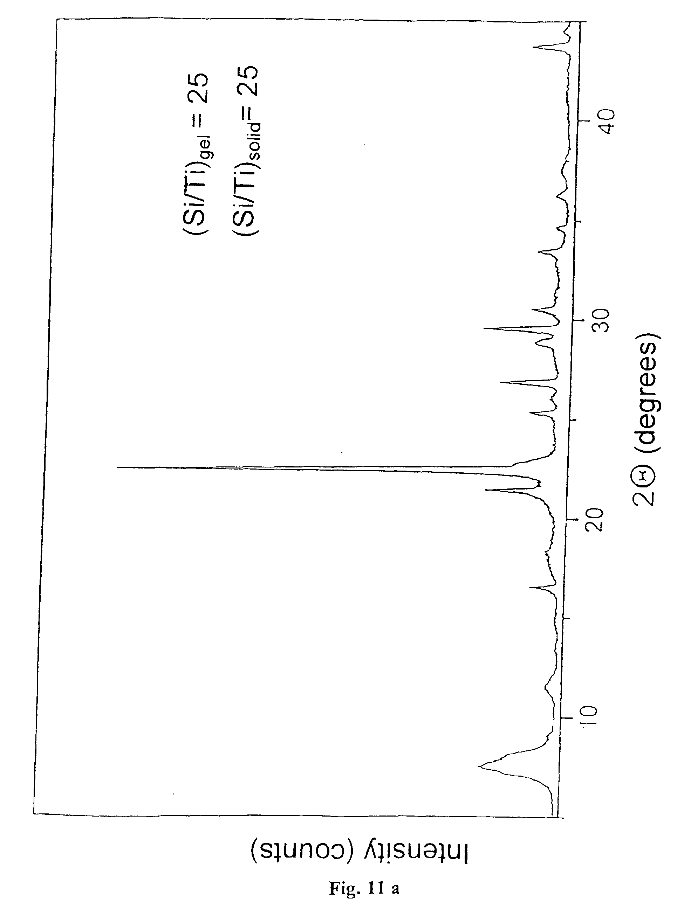

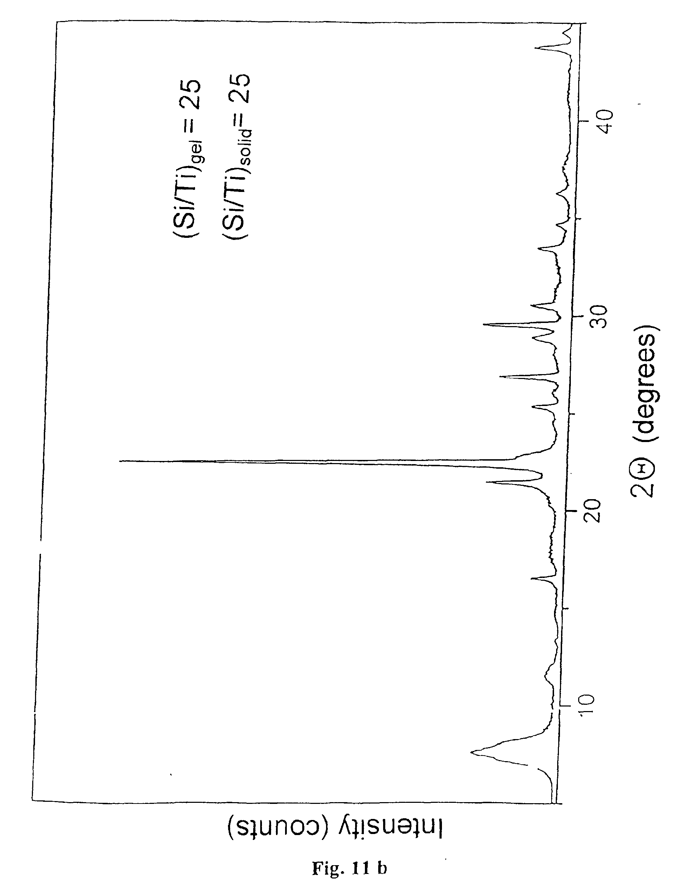

The gel is introduced into autoclaves at 140 °C without stirring for 3 days. Once this time has elapsed, 8.4 g of cetyltrimethylammonium bromide (CTABr) are added to this gel and the crystallisation lasts 14 days. The solid is recovered by filtration, exhaustive washing with distilled water and drying at 60 °C for 12 hours. This solid displays an X-ray diagram shown in figure 11a, which is characteristic of a beta type structure with a crystallinity of 100%, referred to standard commercial Beta zeolite. The Ti content of the sample is of 4.9%, expressed as titanium oxide.

A control experiment wherein no surfactant is introduced gives rise to the formation of a solid displaying a crystallinity of 100% (figure 11b), with the Ti content of the sample being 2.5%, expressed as titanium oxide. This experiment shows that the presence of surfactant under these synthesis conditions increases the degree of incorporation of Ti. In this way, if an attempt is made to obtain Ti-Beta with a high Ti content in the absence of surfactant, one has to start with low Si/Al ratios, which entails long synthesis times. Thus, an experiment with Si/Al ratio = 15 without adding surfactant gives rise to an amorphous solid after 31 days of heating and the appearance of 15% of zeolite is observed following 45 days of synthesis.

## Claims

1. A process for the preparation of zeolites that permits crystallisation times to be reduced and the size of crystal to be controlled, **characterised by** incorporating a cationic, anionic or neutral surfactant to the synthesis mixture of the zeolite.

2. A process for the preparation of zeolites with ducts and/or cavities formed by rings of 9 or more members, **characterised by** incorporating a cationic, anionic or neutral surfactant to the synthesis mixture of the zeolite.

3. A process for the preparation of zeolites with ducts and/or cavities formed by rings of 11 or more members, **characterised by** incorporating a cationic, anionic or neutral surfactant to the synthesis mixture of the zeolite.

4. A process for the preparation of zeolites with Beta type structure, **characterised by** incorporating a cationic, anionic or neutral surfactant to the synthesis mixture of the zeolite.

5. A process for the preparation of zeolites with Faujasite and EMT type structure, **characterised by** incorporating a cationic, anionic or neutral surfactant to the synthesis mixture of the zeolite.

6. A process for the preparation of zeolites with structure of the type MCM-22, ITQ-1, ITQ-3, ITQ-4, ITQ-5, ITQ-7, ITQ-8, ITQ-9, ITQ-10, ITQ-11, ITQ-12, ITQ-13 and ITQ-14, **characterised by** incorporating a cationic, anionic or neutral surfactant to the synthesis mixture of the zeolite.

7. A process for the preparation of zeolites with Ferrierite type structure, **characterised by** incorporating a cationic, anionic or neutral surfactant to the synthesis mixture of the zeolite.

8. A process for the preparation of zeolites with Mordenite type structure, **characterised by** incorporating a cationic, anionic or neutral surfactant to the synthesis mixture of the zeolite.

9. A process for the preparation of zeolites with NU-1 type structure, **characterised by** incorporating a cationic, anionic or neutral surfactant to the synthesis mixture of the zeolite.

10. A process for the preparation of zeolites according to claim 1, **characterised in that** the synthesis mixture contains at least one tetravalent element (T(IV)), optionally a source of one or more trivalent elements (T(III)) or mixtures of T(IV) and T(III), at least one organic and/or inorganic cation, a source of the ions OR and/or F⁻, water and a cationic, anionic or neutral surfactant.

11. A process for the synthesis of zeolites according to claim 2, **characterised in that** the synthesis mixture contains at least one tetravalent element (T(IV)), optionally a source of one or more trivalent elements (T(III)) or mixtures of T(IV) and T(III), at least one organic and/or inorganic cation, a source of the ions OH⁻ and/or F⁻, water and a cationic, anionic or neutral surfactant.

12. A process for the synthesis of zeolites according to claims 3 to 9, **characterised in that** the synthesis mixture contains at least one tetravalent element (T(IV)), optionally a source of one or more trivalent elements (T(III)) or mixtures of T(IV) and T(III), at least one organic and/or inorganic cation, a source of the ions OH⁻ and/or F⁻, water and a cationic, anionic or neutral surfactant.

13. A process for the synthesis of zeolites according to claim 10, **characterised in that** the synthesis temperature lies between 50 and 250 °C and that the synthesis time is between 5 hours and 120 days, preferably being between 15 hours and 60 days.

14. A process for the synthesis of zeolites according to claim 11, **characterised in that** the synthesis temperature lies between 50 and 250 °C and that the synthesis time is between 5 hours and 120 days, preferably being between 15 hours and 60 days.

15. A process for the synthesis of zeolites according to claim 12, **characterised in that** the synthesis temperature lies between 50 and 250 °C and that the synthesis time is between 5 hours and 120 days, preferably being between 15 hours and 60 days.

16. A process for the synthesis of zeolites according to claim 13 and **characterised in that** the cationic surfactants used have the formula [QR₁R₂R₃R₄]⁺ wherein Q is nitrogen or phosphorus and wherein at least one of the groups R_{1,} R_{2,} R_{3,} or R₄ is an aryl or alkyl group containing more than 6 carbon atoms and fewer than 36, and each of the remaining groups R_{1,} R_{2,} R_{3,} or R₄ is a hydrogen or an alkyl or aryl group with fewer than 5 carbons. Those known as geminal surfactants [R₁R₂R₃QR₄Q R₁R₂R₃]²⁺ or {R₁R₂R₃Q[R₄Q(R₅R₆)R₄Q(R₅R₆)R₄]ₙQ R₁R₂R₃}⁽ⁿ⁺²⁾⁺ wherein Q is a nitrogen or phosphorus and at least one of the groups R_{1,} R₂, R₃, R₄, R₅ or R₆ is an aryl or alkyl group containing more than 6 carbon atoms and fewer than 36, and each of the remaining groups R₁, R₂, R₃, R₄, R₅ or R₆ is a hydrogen or an alkyl or aryl group with fewer than 5 carbon atoms and R₄ is a bridge group between two atoms of nitrogen or phosphorus which contains at least one atom of carbon and fewer than 36 are also included.

17. A process for the synthesis of zeolites according to claim 14 and **characterised in that** cationic surfactants used have the formula [QR₁R₂R₃R₄]⁺ wherein Q is nitrogen or phosphorus and wherein at least one of the groups R_{1,} R_{2,} R₃, or R₄ is an aryl or alkyl group containing more than 6 carbon atoms and fewer than 36, and each of the remaining groups R_{1,} R_{2,} R_{3,} or R₄ is a hydrogen or an alkyl or aryl group with fewer than 5 carbons. Those known as geminal surfactants [R₁R₂R₃QR₄Q R₁R₂R₃]²⁺ or {R₁R₂R₃Q[R₄Q(R₅R₆)R₄Q(R₅R₆)R₄]ₙQ R₁R₂R₃}⁽ⁿ⁺²⁾⁺ wherein Q is a nitrogen or phosphorus and at least one of the groups R₁, R₂, R₃, R₄, R₅ or R₆ is an aryl or alkyl group containing more than 6 carbon atoms and fewer than 36, and each of the remaining groups R_{1,} R₂, R₃, R₄, R₅ or R₆ is a hydrogen or an alkyl or aryl group with fewer than 5 carbon atoms and R₄ is a bridge group between two atoms of nitrogen or phosphorus which contains at least one atom of carbon and fewer than 36 are also included.

18. A process for the synthesis of zeolites according to claim 15, **characterised in that** the cationic surfactants used have the formula [QR₁R₂R₃R₄]⁺ wherein Q is nitrogen or phosphorus and wherein at least one of the groups R_{1,} R_{2,} R_{3,} or R₄ is an aryl or alkyl group containing more than 6 carbon atoms and fewer than 36, and each of the remaining groups R_{1,} R_{2,} R_{3,} or R₄ is a hydrogen or an alkyl or aryl group with fewer than 5 carbons. Those known as geminal surfactants [R₁R₂R₃QR₄Q R₁R₂R₃]²⁺ or {R₁R₂R₃Q[R₄Q(R₅R₆)R₄Q(R₅R₆)R₄]ₙQ R₁R₂R₃}⁽ⁿ⁺²⁾⁺ wherein Q is a nitrogen or phosphorus and at least one of the groups R_{1,} R_{2,} R_{3,} R_{4,} R₅ or R₆ is an aryl or alkyl group containing more than 6 carbon atoms and fewer than 36, and each of the remaining groups R₁, R₂, R₃, R₄, R₅ or R₆ is a hydrogen or an alkyl or aryl group with fewer than 5 carbon atoms and R₄ is a bridge group between two atoms of nitrogen or phosphorus which contains at least one atom of carbon and fewer than 36 are also included.

19. A process for the synthesis of zeolites according to claim 13, **characterised in that** the neutral surfactants used have the formula [QR₁R₂R₃] wherein Q is nitrogen or phosphorus and wherein at least one of the groups R₁, R₂ or R₃, is an aryl or alkyl group containing more than 6 carbon atoms and fewer than 36, and each of the remaining groups R₁, R₂ or R₃ is a hydrogen or an alkyl or aryl group with fewer than 5 carbons. Those known as geminal surfactants [R₁R₂QR₃Q R₁R₂] or {R₁R₂Q[R₃Q(R₄)R₃Q(R₄)R₃]ₙQ R₁R₂} wherein Q is a nitrogen or phosphorus and at least one of the groups R₁, R₂, R₃ or R₄ is an aryl or alkyl group containing more than 6 carbon atoms and fewer than 36, and each of the remaining groups R₁, R₂, R₃ or R₄ is a hydrogen or an alkyl or aryl group with fewer than 5 carbon atoms and R₃ is a bridge group between two atoms of nitrogen or phosphorus which contains at least one atom of carbon and fewer than 36 are also included. Also included in this claim are neutral surfactants with formula nR-EO consisting of an alkylpolyethyelene oxide, alkylarylpolyethylene oxides, copolymers of alkylpolypropylene and polyethylene and copolymers of alkylarylpolypropylene and polyethylene.

20. A process for the synthesis of zeolites according to claim 14, **characterised in that** the neutral surfactants used have the formula [QR₁R₂R₃] wherein Q is nitrogen or phosphorus and wherein at least one of the groups R₁, R₂ or R₃, is an aryl or alkyl group containing more than 6 carbon atoms and fewer than 36, and each of the remaining groups R₁, R₂ or R₃ is a hydrogen or an alkyl or aryl group with fewer than 5 carbons. Those known as geminal surfactants [R₁R₂QR₃Q R₁R₂] or {R₁R₂Q[R₃Q(R₄)R₃Q(R₄)R₃]ₙQ R₁R₂} wherein Q is a nitrogen or phosphorus and at least one of the groups R₁, R₂, R₃ or R₄ is an aryl or alkyl group containing more than 6 carbon atoms and fewer than 36, and each of the remaining groups R₁, R₂, R₃ or R₄ is a hydrogen or an alkyl or aryl group with fewer than 5 carbon atoms and R₃ is a bridge group between two atoms of nitrogen or phosphorus which contains at least one atom of carbon and fewer than 36 are also included. Also included in this claim are neutral surfactants with formula nR-EO consisting of an alkylpolyethyelene oxide, alkylarylpolyethylene oxides, copolymers of alkylpolypropylene and polyethylene and copolymers of alkylarylpolypropylene and polyethylene.

21. A process for the synthesis of zeolites according to claim 15, **characterised in that** the neutral surfactants used have the formula [QR₁R₂R₃] wherein Q is nitrogen or phosphorus and wherein at least one of the groups R_{1.} R₂ or R_{3.} is an aryl or alkyl group containing more than 6 carbon atoms and fewer than 36, and each of the remaining groups R_{1,} R₂ or R₃ is a hydrogen or an alkyl or aryl group with fewer than 5 carbons. Those known as geminal surfactants [R₁R₂QR₃Q R₁R₂] or {R₁R₂Q[R₃Q(R₄)R₃Q(R₄)R₃]ₙQ R₁R₂} wherein Q is a nitrogen or phosphorus and at least one of the groups R₁, R₂, R₃ or R₄ is an aryl or alkyl group containing more than 6 carbon atoms and fewer than 36, and each of the remaining groups R₁, R₂, R₃ or R₄ is a hydrogen or an alkyl or aryl group with fewer than 5 carbon atoms and R₃ is a bridge group between two atoms of nitrogen or phosphorus which contains at least one atom of carbon and fewer than 36 are also included. Also included in this claim are neutral surfactants with formula nR-EO consisting of an alkylpolyethyelene oxide, alkylarylpolyethylene oxides, copolymers of alkylpolypropylene and polyethylene and copolymers of alkylarylpolypropylene and polyethylene.

22. A process for the synthesis of zeolites according to claim 13, **characterised in that** the added surfactant is anionic and has the formula RQ⁻ wherein R is an alkyl or aryl group containing more than 6 carbons and fewer than 36. Q is a sulphate, carboxylic or phosphate group or surfactants containing the sulphosuccinate group such as sodium bis-(2ethylhexyl)sulphosuccinate.

23. A process for the synthesis of zeolites according to claim 14, in that the added surfactant is anionic and has the formula RQ⁻ where R is an alkyl or aryl group containing more than 6 carbons and fewer than 36. Q is a sulphate, carboxylic or phosphate group or surfactants containing the sulphosuccinate group such as sodium bis-(2ethylhexyl)sulphosuccinate.

24. A process for the synthesis of zeolites according to claim 15, **characterised in that** the added surfactant is anionic and has the formula RQ⁻ where R is an alkyl or aryl group containing more than 6 carbons and fewer than 36. Q is a sulphate, carboxylic or phosphate group or surfactants containing the sulphosuccinate group such as sodium bis-(2ethylhexyl)sulphosuccinate.

25. A synthesis process according to claims 1, 10, 13, 16, 19 and 22, **characterised in that** the reaction mixture contains a source of T(IV) such as for example, without being limiting, oxides, oxyhydroxide, derived tetraalkyl derivatives and organic or inorganic salts of Si, Ti, Ge, Sn or Zr among others, and optionally as a source of T(III), though without being limiting, oxides, oxyhydroxide, tetraalkyl derivatives and organic or inorganic salts of Al, Ga, Cr, Fe or B among others. Optionally a source of V could also be used. As structure director agents organic or inorganic cations or amines are preferably used, more preferably tertiary ones or organometallic compounds. In addition, a source of hydroxide groups can be added such as for example hydroxides of organic alkylammonium cations, or a source of fluoride ions such as for example, without being limiting, fluorides of alkaline or alkaline earth metals, ammonium fluoride, hydrofluoric acid or fluorides of alkylammonium cations. The surfactant is preferably added to the mixture during the nucleation stage or in the organisation stage of the synthesis gel.

26. A synthesis process according to claims 2, 11, 14, 17, 20 and 23, **characterised in that** the reaction mixture contains a source of T(IV) such as for example, without being limiting, oxides, oxyhydroxide, derived tetraalkyls and organic or inorganic salts of Si, Ti, Ge, Sn or Zr among others, and optionally as a source of T(III), without being limiting, oxides, oxyhydroxide, derived tetraalkyls and organic or inorganic salts of Al, Ga, Cr, Fe or B among others. A source of V could also optionally be used. As director agents of the structure, organic or inorganic cations or amines are preferably used, more preferably tertiary ones or organometallic compounds. In addition, a source of hydroxide groups can be added such as for example hydroxides of organic alkylammonium cations, or a source of fluoride ions such as for example, though without being limiting, fluorides of alkaline or alkaline earth metals, ammonium fluoride, hydrofluoric acid or fluorides of alkylammonium cations. The surfactant is preferably added to the mixture during the nucleation stage or in the organisation stage of the synthesis gel.

27. A synthesis process according to claims 3, 4, 5, 6, 7, 8, 9, 12, 15, 18, 21 and 24, **characterised by** the fact that the reaction mixture contains a source of T(IV) such as for example, though without being limiting, oxides, oxyhydroxide, tetraalkyl derivatives and organic or inorganic salts of Si, Ti, Ge, Sn or Zr among others, and optionally as a source of T(III), without being limiting, oxides, oxyhydroxide, tetraalkyl derivativcs and organic or inorganic salts of Al, Ga, Cr, Fe or B among others. Optionally a source of V could also be used. As structure director agents organic or inorganic cations or amines are preferably used, more prfererably tertiary ones or organometallic compounds. In addition, a source of hydroxide groups can be added such as for example hydroxides of organic alkylammonium cations, or a source of fluoride ions such as for example, without being limiting, fluorides of alkaline or alkaline earth metals, ammonium fluoride, hydrofluoric acid or fluorides of alkylammonium cations. The surfactant is preferably added to the mixture during the nucleation stage or in the organisation stage of the synthesis gel.

28. Application of zeolites obtained according to claims 1 and 25 in acid catalysis processes such as for example, without being limiting, cracking, hydrocracking, isomerisation, hydroisomerisation, alkylation, transalkylation of hydrocarbons and in oxidation processes of alkanes, alkenes, alcohols, thiols, hydroxylation of aromatics, amoxidation of ketones and Bayer-Williger reactions.

29. Application of zeolites obtained according to claims 2 and 26 in acid catalysis processes such as for example, without being limiting, cracking, hydrocracking, isomerisation, hydroisomerisation, alkylation, transalkylation of hydrocarbons and in oxidation processes of alkanes, alkenes, alcohols, thiols, hydroxylation of aromatics, amoxidation of ketones and Bayer-Williger reactions.

30. Application of zeolites obtained according to claims 3, 4, 5, 6, 7, 8, 9 and 27 in acid catalysis processes such as for example, without being limiting, cracking, hydrocracking, isomerisation, hydroisomerisation, alkylation, transalkylation of hydrocarbons and in oxidation processes of alkanes, alkenes, alcohols, thiols, hydroxylation of aromatics, amoxidation of ketones and Bayer-Williger reactions.
